Europäisches Patentamt

European Patent Office

Office européen des brevets

(19)

(11) EP 1 372 008 A1

(12) **EUROPEAN PATENT APPLICATION**

(43) Date of publication:
**17.12.2003 Bulletin 2003/51**

(51) Int Cl.⁷: **G02B 6/42**

(21) Application number: **03008536.9**

(22) Date of filing: **12.04.2003**

(84) Designated Contracting States:
**AT BE BG CH CY CZ DE DK EE ES FI FR GB GR HU IE IT LI LU MC NL PT SE SI SK TR**
Designated Extension States:
**AL LT LV MK RO**

(30) Priority: **13.06.2002 US 170947**

(71) Applicant: **Coltene/Whaledent, Inc.**
**Mahwah, New Jersey 07430 (US)**

(72) Inventors:
• **Colombo, Joseph G.**
  **Mahwah, New Jersey 07430 (US)**
• **Gofman, Igor Y.**
  **Mahwah, New Jersey 07430 (US)**

(74) Representative: **Grättinger & Partner (GbR)**
**Postfach 16 55**
**82306 Starnberg (DE)**

(54) **Concentrated light source for a curing instrument**

(57)     A light source for a curing lamp includes a bundle of fiber optic strands, each mated at a receiving end to a receptacle for receiving an individual light emitting diode (LED) or laser diode (LD). Each receptacle is arranged to collect substantially all light energy produced by its associated LED or LD light source. The transmitting ends of the fiber optic strands are tightly packed to define a transmitting surface, and the transmitting surface thereby transmits a concentrated light beam including substantially all of the collected light energy.

Figure 4

EP 1 372 008 A1

## Description

### FIELD OF THE INVENTION

This invention relates to concentrated light sources. More particularly, the invention relates to a concentrated light source for a dental curing light that employs a manifold fiber optic array for concentrating light from multiple illumination sources.

### BACKGROUND OF THE INVENTION

Dental composites employ well-known materials, and are used in a variety of dental procedures including restoration work and teeth filling after root canal procedures and other procedures requiring drilling. Several well-known dental composites have been sold under the trade names of BRILLIANT LINE, Z-100, TPH, CHARISMA and HERCULITE & BRODIGY.

Such composites are typically formed from liquid and powder components that are mixed together to form a paste. The paste is formed to have a consistency sufficiently workable and self-supporting to be applied to an opening or cavity in a tooth. The liquid component may typically comprise phosphoric acid and water, while the powder component may comprise ceramic materials including cordite, silica or silicium oxide. After the composite is applied to a tooth, it must be cured to form a permanent bond with the tooth.

Curing requires the liquid component to evaporate, causing the composite to harden. In the past, curing has been accomplished by air drying, which has the disadvantage of requiring significant time. This time can greatly inconvenience the patient. More recently, light curing has become popular in the field of dentistry as a means for decreasing curing times. According to this trend, curing lights have been developed for dental curing applications. An example of such a curing light is illustrated by U.S. Patent No. 5,975,895, issued November 2, 1999 to Sullivan, which is hereby incorporated by reference.

Conventional dental curing lights generally employ tungsten filament halogen lamps that incorporate a filament for generating light, a reflector for directing light and a blue filter that limits transmitted light to wavelengths in the region of 400 to 500 nanometers (nm). Light is typically directed from the filtered lamp to a light guide, which directs the light to a position adjacent to the material to be cured.

A problem with conventional halogen-based curing lights is that the lamp, filter and reflector degrade with time. This degradation is particularly accelerated by heat generated by the halogen lamp. For example, this heat may cause filters to blister and cause reflectors to discolor, leading to reductions in light output and curing effectiveness. While heat may be dissipated for example by the addition of a fan unit to the light, the fan adds cost and may cause other undesired effects (for example, noise). Alternate lamp technologies (for example, using Xenon and laser light sources) tend to be costly, require filtration, consume large amounts of power and generate significant heat. In particular, laser technologies have also required stringent safety precautions.

Light Emitting Diodes (LEDs) and Laser Diodes (LDs) appear to be good candidate curing light sources, having reasonable cost and an expected operational life of between 10 and 15 years. In addition, LEDs and LDs can be designed to produce a significant portion of light output having a frequency in the desired range of 400 to 500 nm. For example, much of the spectral radiant intensity for many blue LEDs peaks at 468 nm, producing an almost ideal bandwidth for dental curing applications.

To date, it has been difficult to generate sufficient power levels from LED or LD lamp designs for dental curing applications (a minimum of 800 milliwatts per square centimeter). Accordingly, it would be desirable to develop a curing light using LED or LD lamps having sufficient power to support dental curing applications.

### SUMMARY OF THE INVENTION

These and other deficiencies have been solved by a novel fiber optic light compressor comprising a bundle of fiber optic strands, a plurality of individual LED and/or LD light sources, and a plurality of optical receptacles, each receptacle optically coupled to both a receiving end of a strand in the bundle of fiber optic strands and a single one of the plurality of individual light sources. Each receptacle is arranged to capture substantially all of the light energy output by its associated light source. Strands in the bundle are tightly packed in a longitudinally-oriented array, so that transmitting ends of the strands define a transmitting surface that delivers a concentrated light beam composed of energy produced by each of the plurality of light sources. In this manner, virtually all of the light energy supplied by the individual light sources is delivered to the concentrated light beam.

In a first embodiment of the present invention, the light receptacle comprises an optical taper having a core component relieved at a wide end of the taper in order to receive a light source. A cladding component at the wide end of the taper encapsulates the light source to help confine light energy within the taper.

In a second embodiment of the present invention, the light receptacle comprises a cavity having a cladding-coated surface to encapsulate the light source and to confine light energy. A polished portion of the receiving end of the fiber optic strand is inserted into a housing of the light source (for example, through a transparent bell- shaped structure of an LED or through the exit window of a LD), and fixedly attached to the light source housing using an optical epoxy. Virtually all of the energy of the light source is captured by the polished portion of the strand.

The optical receptacles may be positioned such that their individual centerlines are perpendicular to a centerline of the bundle, in one or more rows that are parallel to the centerline of the bundle. Each row is radially positioned around the bundle. Alternatively, the receptacles may be staggered about the centerline of the bundle to achieve a tighter physical spacing.

In a typical dental curing lamp application having six radial rows of light sources with thirteen individual light sources per row, a concentrated power beam is generated having a light power density in excess of 800 milliwatts per square centimeter.

The aforementioned objects, features and advantages will, in part, be pointed out with particularity, and will, in part, become obvious from the following more detailed description of the invention, taken in conjunction with the accompanying drawing, which forms an integral part thereof.

**BRIEF DESCRIPTION OF THE DRAWINGS**

A more complete understanding of the invention may be obtained by reading the following description of specific illustrative embodiments of the invention in conjunction with the appended drawing in which:

Figure 1(a) and 1(b) illustrate principles associated with launching a light beam in an optical fiber;
Figure 2(a) illustrates light reflection properties for a halogen lamp used in a prior art curing tool application;
Figures 2(b) - 2(d) illustrate features of a prior art curing lamp light source employing multiple LEDs;
Figures 3(a) - 3(g) illustrate several embodiments of the present invention; and
Figure 4 illustrates an application of the present invention employed in a dental curing lamp.
In the various figures, like reference numerals designate like or similar elements of the invention.

**DETAILED DESCRIPTION OF THE PREFERRED EMBODIMENTS**

The following detailed description includes a description of the best mode or modes of the invention presently contemplated. Such description is not intended to be understood in a limiting sense, but to be an example of the invention presented solely for illustration thereof, and by reference to which in connection with the following description and the accompanying drawings one skilled in the art may be advised of the advantages and construction of the invention.

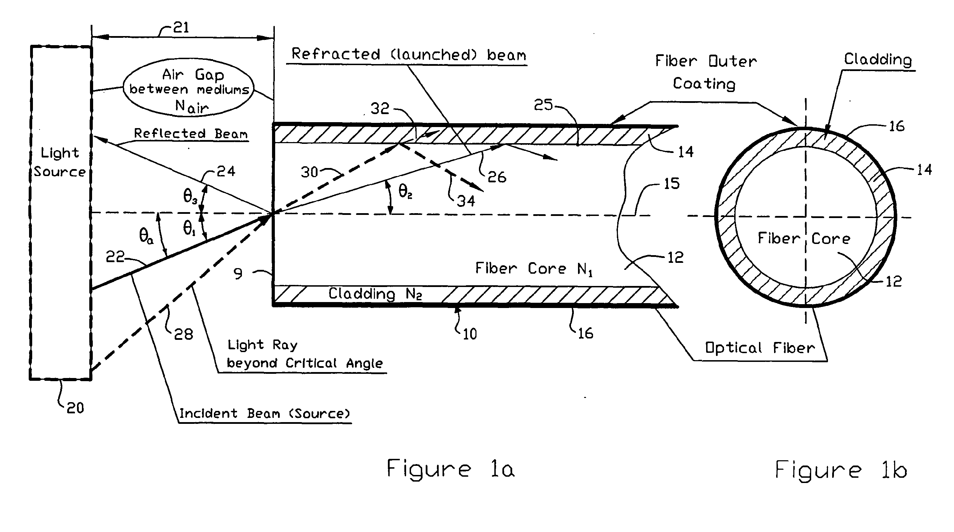

Figures 1(a), 1(b) illustrate a standard light transport medium in the form of an optical fiber 10. Optical fiber 10 includes a fiber core 12, a fiber cladding 14 and a fiber outer coating 16. Fiber core 12 typically serves as the portion of the fiber operative to carry light, and has an index of refraction $N_1$. Fiber cladding 14 serves to help confine light within the core 12, and has an index of refraction $N_2$, which is typically less than $N_1$. Fiber outer coating 16 provides protection against abrasion and other potential physical damage to fiber 10. A typical fiber 10 used for short distance application as will be herein described may have an outer diameter between 0.04 and 0.06 inches in diameter, and have about 83 percent of its cross-sectional area comprising core 12 and about 17 percent of its cross-sectional area comprising cladding 14.

As illustrated in Figure 1(a), incident beam 22 from light source 20 moves across air medium gap 21 to strike receiving end face 9 of the fiber 10 at an angle $\theta_1$ with respect to fiber centerline 15. Incident beam 22 is reflected at end face 9 as reflected beam 24, and is refracted at end face 9 as refracted beam 26. Reflected beam 24 makes an angle $\theta_3$ with respect to centerline 15, and refracted beam 26 makes an angle $\theta_2$ with respect to centerline 15. Because end face 9 is perpendicular to centerline 15, angle $\theta_3$ is equal to angle $\theta_1$. Employing Snell's law, angle $\theta_2$ can be determined by using the following relationship:

$$N_{air} * \sin \theta_1 = N_1 * \sin \theta_2 \qquad (1)$$

Where $N_{air}$ is an index of refraction for air, and $N_1$ is the index of refraction for the fiber core.

Ideally, incident light from light source 20 will be fully refracted at end face 9 to enter fiber core 12, and light reaching interface 25 between fiber core 12 and fiber cladding 14 will be reflected at interface 25 , thereby causing light to travel in a contained fashion within fiber 10. However, if light enters fiber core 12 at a sufficiently large angle with respect to centerline 15 (as illustrated by light beam 30 refracted from incident light beam 28), some light (illustrated by light beam 32) may escape fiber core 12 and be refracted through fiber cladding 14. The angle beyond which light cannot be fully carried within fiber core 12 is referred to as the critical angle.

A useful property of an optical system or element is numerical aperture (NA), which may be defined as the sine of the vertex angle of the largest cone of light that can enter or leave the system or element, multiplied by the index of refraction for the medium in which the vertex of the cone is located. In the case of optical fiber 10, a capacity for accepting light rays from light source 20 may be represented by a numerical aperture calculated as follows:

$$NA = \sqrt{((N_1)^2 - (N_2)^2)} \qquad (2)$$

Where $N_1$ is the index of refraction for core 12, and $N_2$ is the index of refraction for the cladding 14.

For example, in a common fiber configuration for short distance fiber transmission where $N_1$ = 1.62 and $N_2$ = 1.52, NA= .56, which corresponds to a maximum underlying critical angle of 34 degrees. In other words, any light supplied by light source 20 at an off-centerline incident angle $\theta_a$ in excess of the maximum underlying critical angle will not be accepted by fiber 10. As fiber 10 accepts light up to 34 degrees off centerline 15 in any direction, the maximum acceptance angle of the fiber 10 is twice the maximum underlying critical angle, or 68 degrees.

As a result of various optical effects including transmissive losses within the fiber and refractive properties at the fiber boundaries, the maximum angle at which light rays will exit from a delivery end face (not shown) of fiber 10 of Figure 1 will generally be less than the maximum underlying critical angle at which light rays are delivered by light source 20 to receiving end face 9. For example, a fiber having a maximum underlying critical angle of 34 degrees may be limited to a maximum exit angle as small as 26 degrees. In order to avoid this loss of incident light, the maximum incident angle $\theta_a$ for light source 20 is preferably selected to be about 50 percent less than the maximum acceptance angle. For example, for a critical angle of 34 degrees in a short-range fiber 10 having a NA of 0.56, a maximum incident angle of between 18 and 25 degrees is preferred.

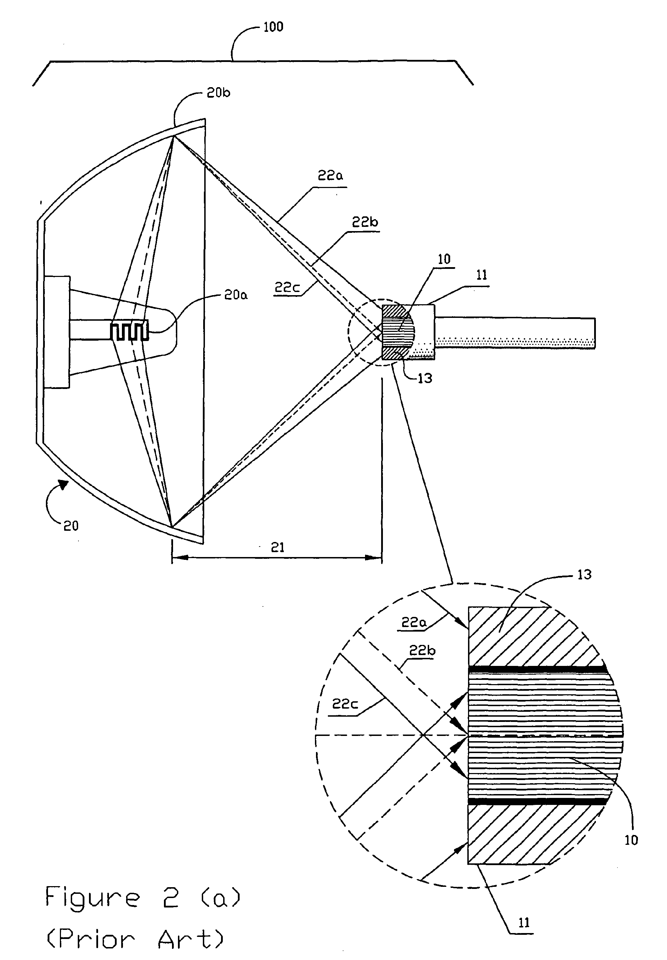

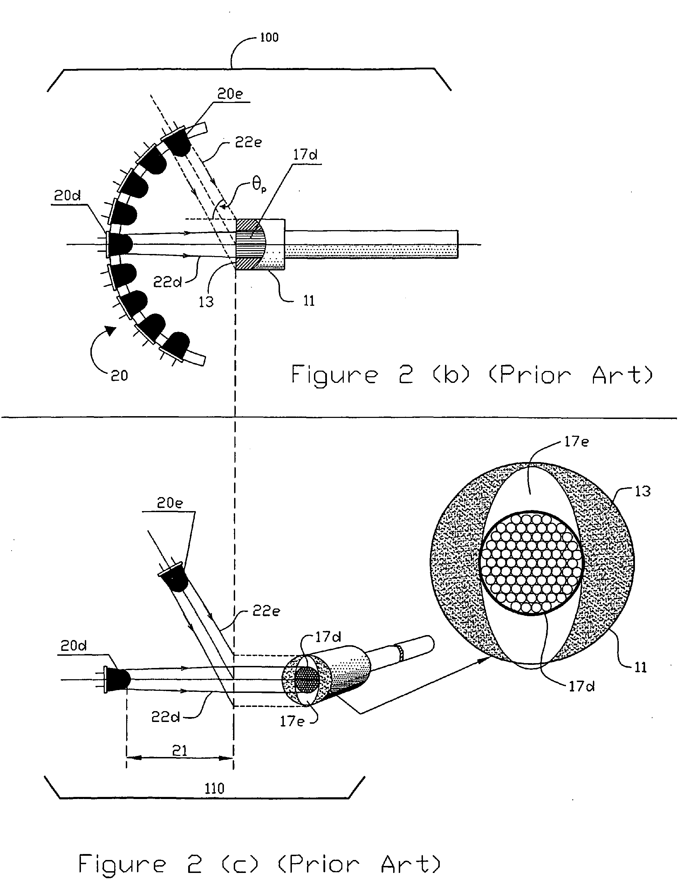

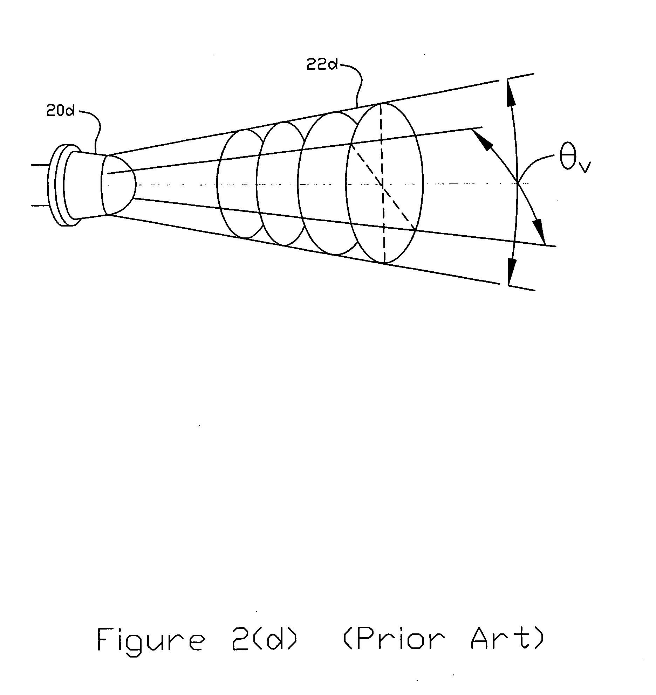

Figure 2(a) illustrates a conventional light source and pickup assembly 100 used in curing lights similar to the curing light disclosed by U.S. Patent No. 5,975,895. Halogen light source 20 includes an illuminating element 20a which radiates and directs light to reflector 20b, from which at least a portion of the reflected light (represented by rays 22a, 22b and 22c) are directed to pickup 11. As shown in the enlarged portion of Figure 2(a), rays 22b, 22c are directed to fiber bundle 10, and will be refracted into fibers in fiber bundle 10 only so long as rays 22b, 22c are not reflected beyond the critical angle for fibers in fiber bundle 10. As can also be seen from the enlarged portion of Figure 2(a), at least a portion of light ray 22a impinges on pickup 11 in bundle support area 13 surrounding fiber bundle 10, and is therefore not received by fiber bundle 10 at all. In this manner, much of the light energy produced by lamp 20 is either reflected away or otherwise fails to reach fiber bundle 10.

Figures 2(b) and 2(c) illustrate a second light source and pickup assembly 110. Lamp array 20 comprises a plurality of LEDs (represented, for example, by LEDs 20d and 20e of Figure 2(b)) positioned in a semicircular array with respect to pickup 11. Importantly, as illustrated in Figure 2(d), LED 20d presents a viewing angle $\theta_v$, which may vary from 25 degrees to more than 80 degrees according to the specifications of the LED manufacturer. (representative LEDs are commercially available, for example, from Nichia America Corporation of Mountville, Pennsylvania).

Accordingly, and as illustrated in Figures 2(c) and (2d), LED 20d having viewing angle $\theta v$ is optimally placed a distance 21 from pickup assembly 11 in order for light rays 22d to coincide in area with the area of fiber bundle 17d. If placed at a greater distance, light dispersion defined by viewing angle $\theta v$ will cause some of the rays at the periphery of light rays 22d to strike pickup assembly 11 outside of the area defined by fiber bundle 17d.

While light rays 22d coincide in area with fiber bundle area 17d, it can be seen from Figure 2(c) that light rays 22e associated with LED 20e strike bundle support surface 13 at an angle $\theta_P$, thereby creating an oval-shaped light beam 17e on surface 13. Portions of light beam 17e extend beyond bundle area 17d. Accordingly, in the light source and pickup assembly 110 illustrated by Figures 2(b) - 2(d), some light generated by LEDs 20 will most likely fail to be captured by fiber bundle 10.

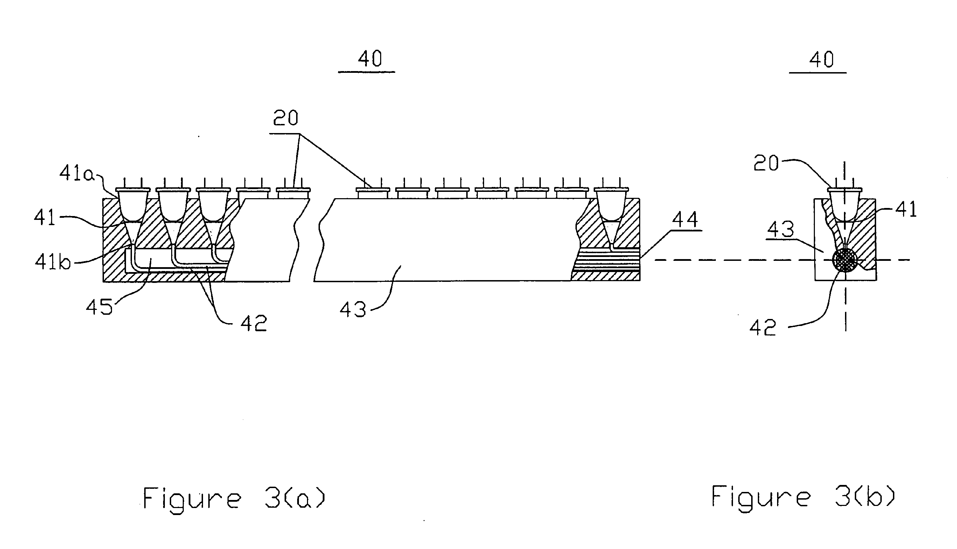

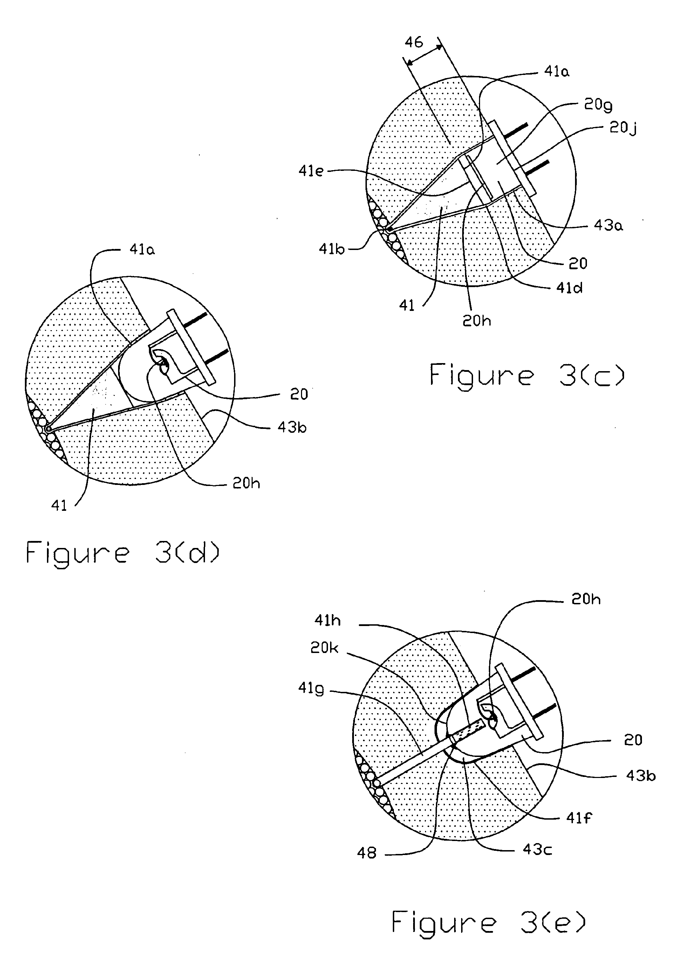

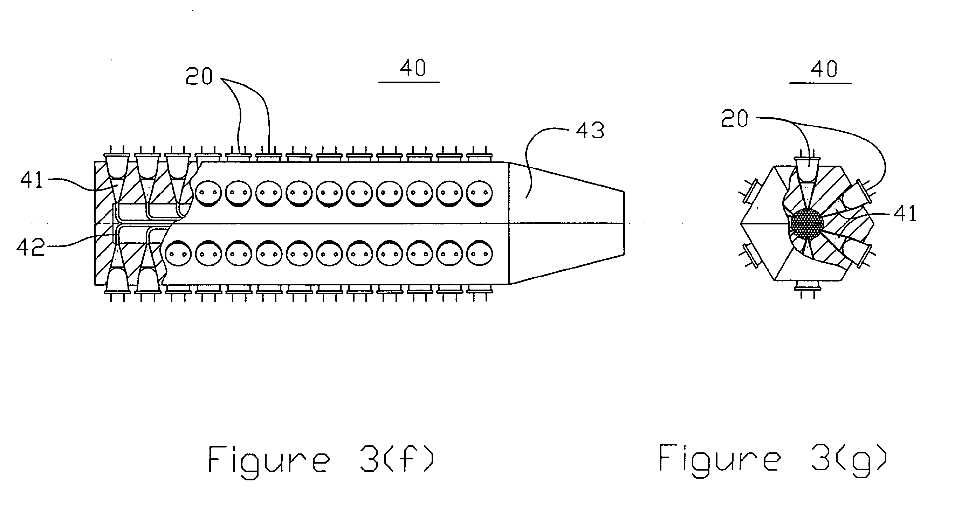

The present invention overcomes the limitations of these prior art systems. Several aspects of the present invention are illustrated in Figures 3(a) - 3(g), and will be described with reference thereto.

Figures 3(a) and 3(b) illustrate a fiber optic light assembly 40. In Figure 3(a), a plurality of light sources 20 are each positioned near a large end 41a of one of a plurality of optical receptacles 41. A small end 41b of each of the plurality of optical receptacles 41 is fusedly connected to a receiving end of one of a plurality of optical fiber strands 42. Optical receptacles 41 are fixedly positioned within receiver 43. Receiver 43 has a cavity 45 for routing fiber optic strands 42 to terminate at a transmitting surface 44. As illustrated in Figure 3(b), optical fiber strands 42 are tightly and longitudinally bundled within cavity 45. Thus, light collected from light sources 20 via optical receptacles 41 is transmitted by fiber optic strands 42 to transmitting surface 44, and emerges in a concentrated light beam at transmitting surface 44.

Figures 3(c) and 3(e) illustrate two embodiments of the optical receptacle 41 of Figures 3(a), 3(b). In Figure 3(c), LD 20 is coupled to a tapered optical fiber 41, in which a core material has been removed at large end 41a of taper 41 to a depth 46 in order to accommodate insertion of LD 20 at large end 41a. Cladding 41d remains in place over the entire distance between large end 41a and small end 41b. It should be noted that, in forming a recess for LD 20 within taper 41, one alternative to removing core material to a depth 46 to form the recess may be to extend cladding 41d by a length 46 to form the recess.

As illustrated in the embodiment of Figure 3(c), aperture 43a holds LD 20 and taper 41 in a fixed position. Cladding 41d extends over outer metallic cover 20g of the LD 20, and serves together with base surface 20j to contain light emitted by LD element 20h so that it may be reflected into receiving surface 41e of the taper 41 through a window (not shown) in outer cover 20g.

Taper 41 is positioned in aperture 43a of opaque receiver 43 so that virtually none of the light emitted by LD 20 escapes taper 41. In addition, taper 41 guides light received from LD 20 into an interfacing fiber strand 42 such that virtually no light is directed to fiber strand 42 at an angle in excess of the critical angle for fiber strand 42. In this manner, virtually all light energy emitted by LD element 20h is collected by fiber strand 42 and transmitted to transmitting surface 44.

In Figure 3(d), LED 20 is coupled with the tapered optical fiber 41 of Figure 3(c) at large end 41a. Once more, a sufficient amount of core material has been removed at large end 41a in order to accommodate insertion of LED 20 at large end 41a such that LED element 20h is positioned below an outer surface 43b of opaque receiver 43. Again, virtually all light emitted by LED element 20h is collected by taper 41 and transmitted to transmitting surface 44.

Figure 3(e) illustrates a second embodiment of optical receptacle 41. In Figure 3(e), coated optical fiber 41g extends into cavity 43c, which is lined by cladding 41f. LED 20 is positioned within cavity 43c such that LED element 20h is positioned below outer surface 43b of receiver 43. Fiber 41g pierces transparent bell-shaped structure 20k of LED 20 at an apex of transparent bell-shaped structure 20k, and is fixed to transparent structure 20k, for example, with optical epoxy 48 (commercially available, for example, from Epoxy Technology of Billenia, Massachusetts). Fiber end 41h of fiber 41g positioned within transparent bell-shaped structure 20k is highly polished in order to remove coating and cladding layers. As a result, substantially all light emitted by LED element 20h is collected by polished fiber end 41h. It should be noted that one skilled in the art would be easily able to substitute other devices for the LED 20 of Figure 3(e) (for example, laser diodes).

Figures 3(f) and 3(g) illustrate an alternate configuration for fiber optic light source 40 of Figures 3 (a), 3(b). In the light source 40 of Figures 3(f) and 3(g), receiver 43 is arranged to position six longitudinal rows of LEDs 20 and tapers 41, each row radially positioned with respect to cavity 45. This configuration of LEDs 20, tapers 41 and fibers 42 permits a significant number of LEDs 20 to be positioned in a relatively small space (suitable, for example, for positioning within the handle of a dental curing lamp). In the configuration shown in Figures 3(f) and 3(g), six longitudinal rows of thirteen LEDs each yields a concentrated light source of 78 LEDs. This array yields an effective power density in excess of 800 milliwatts per square centimeter.

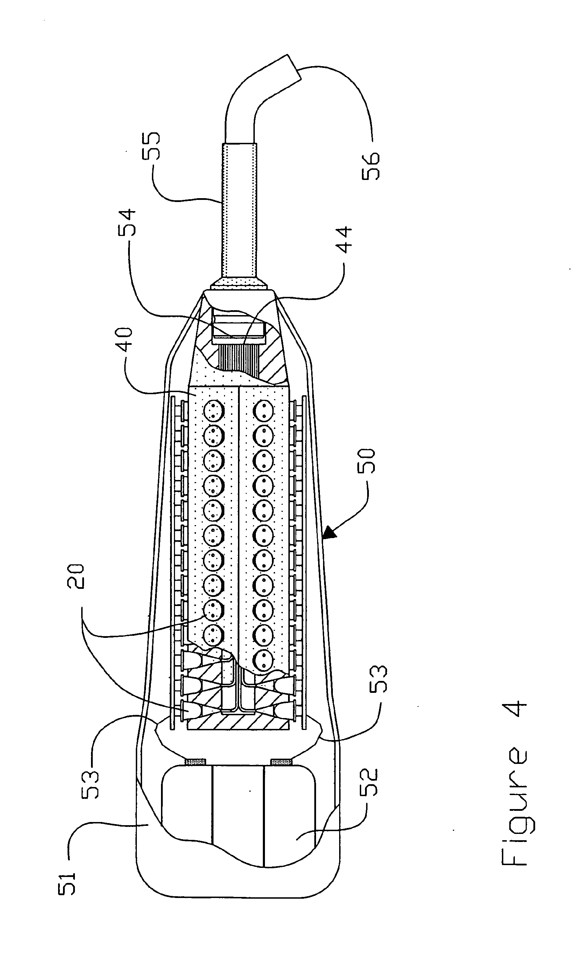

Figure 4 shows the light source 40 of Figures 3(f), 3(g) incorporated in a dental curing light 50. Light source 40 is positioned, for example, within case 51 of light 50 that case 51 may also function as a gripping handle. Case 51 contains power supply 52, which provides power to light sources 20 via power feed cables 53. Transmitting surface 44 of light source 40 is optically coupled at a receiving end 54 of transmitting tip 55, which channels light emitted at transmitting surface 44 to tip end 56, for emissions and application to polymerize a dental material.

It should be apparent to one skilled in the art that a great variety of configurations arranged to have a variety of numbers of LED rows and a variety of numbers of LEDs in each row are fully contemplated by the present invention. A number of other variants on this configuration are contemplated as well (for example, a radial array of LEDs in which alternating LED's in each row are offset from adjacent LEDs in the row in order to reduce the overall length of the array). Any configuration contemplating multiple solid-state light sources 20 each individually in combination with a tapered or other receptacle 41 designed to capture substantially all light emitted by the individual light source 20 and delivering the captured light to an optical fiber such that a plurality of optical fibers form a bundle that provides a concentrated light beam powered from the individual light sources 20 is contemplated by the present invention.

It should also be apparent to one skilled in the art that the configuration of Figures 3(f) and 3(g) may be implemented with a number of types of receptacles 41 and light sources 20, including the preferred configuration of Figure 3(e).

While the present invention has been described at some length and with some particularity with respect to the several described embodiments, it is not intended that it should be limited to any such particulars or embodiments or any particular embodiment, but it is to be construed with references to the appended claims so as to provide the broadest possible interpretation of such claims in view of the prior art and, therefore, to effectively encompass the intended scope of the invention.

**Claims**

1. A concentrated light source, the light source comprising:

a bundle of fiber optic strands, each strand having a receiving end and a transmitting end, wherein the fiber optic strands are tightly packed in a longitudinally-oriented array such that the transmitting ends define a transmitting surface;
a plurality of individual light sources;
a plurality of optical receptacles, each receptacle optically coupled to a receiving end of one of the bundle of fiber optic strands and to one of the plurality of individual light sources, wherein the receptacle is arranged to collect substantially all light energy produced by the received light source and to deliver the collected light energy to the receiving end of the fiber optic strand; such that
a concentrated light beam comprising light energy from each of the plurality of light sources is delivered at the transmitting surface.

2. The light source of claim 1, further comprising a receiver for fixedly positioning the plurality of individual light sources, the plurality of optical receptacles, the bundle of fiber optic strands and the transmitting surface in a predetermined geometry.

3. The light source of claim 1, wherein each of the plurality of individual light sources is a semiconductor light source selected from the group consisting of Light Emitting Diodes (LEDs) and Laser Diodes (LDs).

4. The light source of claim 1, wherein each of the plurality of optical receptacles comprises an optical taper.

5. The light source of claim 4, wherein the optical taper comprises core and cladding components, the core component being relieved at a receiving end of the optical taper in order to receive an individual light source.

6. The light source of claim 1, wherein each of the plurality of optical receptacles comprises:

a cavity for receiving and retaining light emitted by an individual light source; and
a tip portion of the receiving end of one of the bundle of fiber optic strands, said tip portion arranged to be in close proximity to a coupled light source.

7. The light source of claim 6, wherein a surface of the cavity for receiving an individual light source comprises a cladding material.

8. The light source of claim 6, wherein the tip portion pierces the light source to be positioned in proximity to a radiant element of the light source.

9. The light source of claim 8, wherein the inserted portion is fixedly attached to the individual light source with an optical epoxy.

10. The light source of claim 2, wherein the plurality of light sources are arranged in a radial array with respect to the bundle.

11. The light source of claim 10, wherein the radial array comprises a plurality of radial arrays.

12. The light source of claim 11, wherein corresponding light sources in each of the plurality of radial arrays are aligned in rows, each row being parallel to a longitudinal axis of the bundle.

13. The light source of claim 12, comprising thirteen radial arrays and rows.

14. The light source of claim 2, wherein the plurality of individual light sources are arrayed in at least one row parallel to a longitudinal axis of the bundle.

15. The light source of claim 2, wherein longitudinal axes of the receptacles are perpendicularly positioned with respect to a longitudinal axis of the bundle.

16. The light source of claim 1, wherein each strand in the bundle of fiber optic strands has an outer diameter between 0.04 and 0.06 inches.

17. The light source of claim 1, wherein each strand in the bundle of fiber optic strands has a numerical aperture of 0.56.

18. A curing lamp comprising a concentrated light source, the curing lamp further comprising:

a bundle of fiber optic strands, each strand having a receiving end and a transmitting end, wherein the fiber optic strands are tightly packed in a longitudinally-oriented array such that the transmitting ends define a transmitting surface;
a plurality of individual light sources;
a plurality of optical receptacles, each receptacle optically coupled to a receiving end of one of the bundle of fiber optic strands and to one of the plurality of individual light sources, wherein the receptacle is arranged to collect substantially all light energy produced by the received light source, and to deliver the collected light energy to the receiving end of the fiber optic strand; such that
a concentrated light beam comprising light energy from each of the plurality of light sources is delivered at the transmitting surface.

19. The curing lamp of claim 18, wherein the concentrated light beam produces a light energy density of at least 800 milliwatts per square centimeter.

20. A method for concentrating light produced by a plurality of individual light sources, the method comprising the steps of:

optically coupling each of the plurality of light sources to one of a plurality of optical receptacles;
optically coupling each of the optical receptacles to a receiving end of one of a plurality of optical conduits;
arranging transmitting ends of the plurality of optical conduits to form a transmitting surface;

collecting for each of the plurality of individual light sources substantially all of the light produced by said individual light source by the coupled optical receptacles;

delivering the collected light for each of the plurality of optical receptacles from the receiving end of the coupled optical conduit to the transmitting end of the coupled optical conduit; and

transmitting the delivered light from the transmitting surface as a singular, concentrated light beam.

21. The method of claim 20, wherein each of the plurality of optical conduits is an optical fiber.

Figure 1a

Figure 1b

Figure 2 (a)
(Prior Art)

Figure 2 (b) (Prior Art)

Figure 2 (c) (Prior Art)

Figure 2(d)   (Prior Art)

40

20

41a

41

41b

45

42

43

44

Figure 3(a)

40

20

43

42

41

Figure 3(b)

EP 1 372 008 A1

Figure 3(c)

Figure 3(d)

Figure 3(e)

Figure 3(f)

Figure 3(g)

EP 1 372 008 A1

Figure 4

## EUROPEAN SEARCH REPORT

**European Patent Office**

**Application Number**

EP 03 00 8536

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 6 290 382 B1 (LEMAIRE CHARLES A ET AL) 18 September 2001 (2001-09-18) | 1-7, 14-17, 20,21 | G02B6/42 |
| Y | * column 8, line 7 * <br><br> * column 8, line 51 - line 65 * <br> * figures 3-7 * | 8-13,18, 19 | |
| A | US 4 818 062 A (SCIFRES DONALD R ET AL) 4 April 1989 (1989-04-04) * column 3, line 67 * | 3 | |
| Y | EP 0 304 939 A (HITACHI CABLE ;HITACHI LTD (JP)) 1 March 1989 (1989-03-01) * page 7, line 38 * * page 9, line 45 - line 47 * * page 13, line 48 * * figures 6A-6D * | 8,9 | |
| Y | WO 01 69691 A (REIPUR JOHN ;REIPUR TECHNOLOGY AS (DK)) 20 September 2001 (2001-09-20) | 10-13 | |
| A | * figures 1-3,5-20 * | 14 | **TECHNICAL FIELDS SEARCHED (Int.Cl.7)** <br> G02B <br> H01S <br> A61C |
| Y | WO 97 36552 A (MACKELLAR GEOFFREY ROSS ;DOUBE CHRISTOPHER PHILIP (AU); NULITE SYS) 9 October 1997 (1997-10-09) | 18,19 | |
| A | * abstract; figure 2 * | 2 | |
| A | US 5 579 422 A (BAER THOMAS M ET AL) 26 November 1996 (1996-11-26) * figure 1 * | 1 | |

The present search report has been drawn up for all claims

| Place of search | Date of completion of the search | Examiner |
|---|---|---|
| MUNICH | 12 August 2003 | Beutter, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 03 00 8536

This annex lists the patent family members relating to the patent documents cited in the above-mentioned European search report.
The members are as contained in the European Patent Office EDP file on
The European Patent Office is in no way liable for these particulars which are merely given for the purpose of information.

12-08-2003

| Patent document cited in search report | | Publication date | Patent family member(s) | | Publication date |
|---|---|---|---|---|---|
| US 6290382 | B1 | 18-09-2001 | NONE | | |
| US 4818062 | A | 04-04-1989 | US | 4763975 A | 16-08-1988 |
| | | | US | 4820010 A | 11-04-1989 |
| | | | US | RE33722 E | 22-10-1991 |
| EP 0304939 | A | 01-03-1989 | CA | 1310531 C | 24-11-1992 |
| | | | CN | 1033698 A ,B | 05-07-1989 |
| | | | DE | 3850623 D1 | 18-08-1994 |
| | | | DE | 3850623 T2 | 27-10-1994 |
| | | | EP | 0304939 A2 | 01-03-1989 |
| | | | JP | 1131506 A | 24-05-1989 |
| | | | US | 4946242 A | 07-08-1990 |
| WO 0169691 | A | 20-09-2001 | AU | 4230101 A | 24-09-2001 |
| | | | WO | 0169691 A1 | 20-09-2001 |
| WO 9736552 | A | 09-10-1997 | AU | 2144797 A | 22-10-1997 |
| | | | WO | 9736552 A1 | 09-10-1997 |
| US 5579422 | A | 26-11-1996 | US | 5436990 A | 25-07-1995 |
| | | | US | 5127068 A | 30-06-1992 |
| | | | DE | 19680482 T0 | 21-08-1997 |
| | | | EP | 0774129 A1 | 21-05-1997 |
| | | | GB | 2306051 A ,B | 23-04-1997 |
| | | | JP | 3423723 B2 | 07-07-2003 |
| | | | JP | 2000505206 T | 25-04-2000 |
| | | | WO | 9638749 A1 | 05-12-1996 |
| | | | DE | 69132950 D1 | 18-04-2002 |
| | | | DE | 69132950 T2 | 28-11-2002 |
| | | | EP | 0486175 A2 | 20-05-1992 |
| | | | JP | 5093828 A | 16-04-1993 |
| | | | JP | 2003035849 A | 07-02-2003 |

EPO FORM P0459

For more details about this annex : see Official Journal of the European Patent Office, No. 12/82